Europäisches Patentamt

European Patent Office

Office européen des brevets

(19)

(11) Veröffentlichungsnummer : **0 421 154 B1**

(12)                    **EUROPÄISCHE PATENTSCHRIFT**

(45) Veröffentlichungstag der Patentschrift :
**04.08.93 Patentblatt 93/31**

(51) Int. Cl.$^5$ : **C08G 18/42,** C08G 18/66, C08G 18/12, C08G 18/08, C09J 175/06

(21) Anmeldenummer : **90117448.2**

(22) Anmeldetag : **11.09.90**

(54) **Schnellkristallisierende Polyurethansysteme.**

(30) Priorität : **23.09.89 DE 3931845**

(43) Veröffentlichungstag der Anmeldung :
**10.04.91 Patentblatt 91/15**

(45) Bekanntmachung des Hinweises auf die Patenterteilung :
**04.08.93 Patentblatt 93/31**

(84) Benannte Vertragsstaaten :
**BE DE ES FR GB IT NL**

(56) Entgegenhaltungen :
**EP-A- 0 283 345**
**EP-A- 0 340 906**
**EP-A- 0 344 912**
**FR-A- 2 241 602**

(73) Patentinhaber : **BAYER AG**
**W-5090 Leverkusen 1 Bayerwerk (DE)**

(72) Erfinder : **Meckel, Walter, Dr.**
**Zonserstrasse 9**
**W-4040 Neuss (DE)**
Erfinder : **Hänsel, Eduard, Dr.**
**Espenstrasse 2**
**W-5600 Wuppertal-Elberfeld (DE)**
Erfinder : **Arend, Günter, Dr.**
**Claudiusstrasse 42**
**W-4047 Dormagen 1 (DE)**
Erfinder : **König, Klaus, Dr.**
**Zum Hahnenberg 40**
**W-5068 Odenthal (DE)**

## Beschreibung

Die Erfindung betrifft Isocyanatgruppen enthaltende Polyurethan-Systeme auf Basis von wenigstens zwei Polyestern mit unterschiedlichem Schmelzpunkt und ein Verfahren zum Verkleben von Substraten unter Verwendung der erfindungsgemäßen Polyurethansysteme.

Schmelzklebstoffe sind seit langem bekannt. Ihre Vorteile bestehen darin, daß sie, als heiße Schmelzen aufgetragen, rasch beim Abkühlen erstarren und damit Festigkeit aufbauen. Ihr Nachteil besteht darin, daß bedingt durch die hohen Schmelztemperaturen das Verkleben von temperaturempfindlichen Substraten erschwert ist, und daß die Klebungen durch den thermoplastischen Charakter der Polymere bei Temperaturerhöhung rasch an Festigkeit einbüßen.

Eine elegante Art, die Eigenschaften von Schmelzklebstoffen, nämlich beim Abkühlen Festigkeit aufzubauen, gleichzeitig bei tiefen Temperaturen anwendbar zu sein, aber doch Klebungen guter Wärmefestigkeit zu geben, sind die in der DE-PS 878 827 und DE-A-2 609 266 genannten reaktiven Hotmeltsysteme auf Basis von isocyanathaltigen Prepolymeren aus Diisocyanaten und Polyesterdiolen mit Schmelzbereichen oberhalb 40°C. Aufgrund des niedrigen Molekulargewichts sind die Produkte bei Temperaturen wenig oberhalb des Schmelzbereiches der Polyester flüssig und verarbeitbar und erreichen durch Rekristallisation erhöhte Anfangsfestigkeiten und die Endfestigkeiten durch Reaktion der freien Isocyanatgrupen mit beispielsweise Luftfeuchtigkeit unter Ausbildung von linearen, hochmolekularen Polyurethanpolyharnstoffen.

Da solche Systeme trotz ihres niedrigen Molekulargewichts eine gewisse Festigkeit nach Auftrag der Schmelze nach Möglichkeit sofort aufbauen sollen, sind für die Zusammensetzung der Schmelzklebstoffe kristalline Polyester unbedingt erforderlich. Hierfür sind insbesondere die Polyester auf Basis aliphatischer Dicarbonsäuren mit einer geraden Anzahl von Kohlenstoffatomen, wie beispielsweise Adipin-, Sebacin- oder Dodecandisäure und Diolen, wie beispielsweise Butan- oder Hexandiol geeignet. Hierbei nehmen mit steigender Kettenlänge der Dicarbonsäuren und der Diole die Schmelzpunkte und die Kristallisationsgeschwindigkeit der Polyester und damit auch die der Hotmelts zu.

Es zeigt sich aber, daß Systeme auf Basis sehr schnell kristallisierender Polyester, wie z.B. auf Basis von Dodecandisäure und Hexandiol-1,6, zu sehr spröden Produkten führen, so daß von daher einer wünschenswerten Erhöhung der Anfangsfestigkeit durch rasche Kristallisation Grenzen gesetzt sind. Es hat nicht an Versuchen gefehlt, diese Nachteile aus dem Wege zu räumen, so werden beispielsweise gemäß EP-A-107 097 hochmolekulare Fremdpolymere zu den isocyanathaltigen Prepolymeren zugegeben, um die Anfangsfestigkeit zu erhöhen. Die Compoundierung solcher Produkte ist aber sehr aufwendig und nur mit teuren Maschinen, wie Planetenmischern oder Extrudern zu bewerkstelligen, da die Viskosität der Systeme stark ansteigt. Diese Compoundierung führt in vielen Fällen auch zu einer Beeinträchtigung der Lagerstabilität.

Aufgabe der Erfindung war es, Polyurethansysteme aufzufinden, die eine rasche Kristallisation, eine hohe Flexibilität nach dem Kristallisieren und eine gute Aushärtung aufweisen.

Gegenstand der Erfindung sind Isocyanatgruppen enthaltende Polyurethansysteme auf Basis von Polyesterpolyolen und wenigstens einem Polyisocyanat, erhältlich durch Umsetzung von

A) 70 bis 98 Gew.-Teilen wenigstens eines Polyesterdiols A mit einem Schmelzpunkt von 30°C bis 60°C und einem Molekulargewicht von 800 bis 8.000

B) 2 bis 30 Gew.-Teilen wenigstens eines Polyesterdiols B mit einem Schmelzpunkt von 65°C bis 150°C und einem Molekulargewicht von 600 bis 8.000

C) gegebenenfalls wenigstens einem Diol C mit

D) wenigstens einem Polyisocyanat D

wobei das Verhältnis der Isocyanatgruppen des Polyisocyanats D zu den Hydroxylgruppen von A, B und gegebenenfalls C zwischen 3:1 und 1,2:1 liegt und wobei maximal 1 Mol C auf 1 Mol A + B kommen.

Gegenstand der Erfindung ist weiterhin ein Verfahren zum Verkleben von Substraten unter Verwendung der erfindungsgemäßen Polyurethansysteme, vorzugsweise als Schmelzklebstoffe.

Überraschenderweise zeigt sich, daß durch Zugabe von geringen Anteilen hochschmelzender Polesterpolyole B die Kristallisationsgeschwindigkeit der Systeme stark beschleunigt werden kann, ohne die Gesamteigenschaften zu beeinträchtigen.

Ein solches Verhalten war in keiner Weise zu erwarten, da normalerweise Mischungen von kristallinen Komponenten im Vergleich zu den reinen Komponenten der Mischung langsamer und bei niedrigeren Temperaturen kristallisieren, insbesondere, wenn eine der Komponenten nur zu einem untergeordneten Anteil vorhanden ist.

Als Polyesterdiole A des Schmelzbereichs 30°C bis 60°C, vorzugsweise 50°C bis 60°C und Molekulargewichten von 800 bis 8.000, vorzugsweise 1.500 bis 6.000, kommen im wesentlichen Polyesterdiole auf Basis von Kohlensäure oder Dicarbonsäuren, wie beispielsweise Bernstein-, Adipin-, Kork-, Azelainsäure und Diole, wie beispielsweise Ethylenglykol, Butandiol-1,4 und Hexandiol-1,6 in Betracht, wobei unter den Säuren die Adipin- und Kohlensäure und unter den Diolen Butan- und Hexandiol bevorzugt sind. Bevorzugt sind auch Polyesterdiole auf Basis von Hydroxycarbonsäuren, insbesondere 6-Hydroxycapronsäure oder Umsetzungsprodukten von Diolen mit ε-Caprolakton. Es können auch geringfügige Menge von anderen Diolen und/oder Dicarbonsäuren mitverwendet werden, solange der Schmelzbereich der Polyester, definiert durch das Endothermiemaximum in der Differentialthermoanalyse, zwischen 30°C und 60°C, vorzugsweise zwischen 40°C und 60°C, besonders bevorzugt zwischen 50°C und 60°C, liegen soll, wobei die Aufheizgeschwindigkeit 5°C/min beträgt.

Als Polyester B des Schmelzbereichs 65°C bis 150°C, vorzugsweise 70°C bis 145°C, wieder durch das Endothermiemaximum in der Differenthialthermoanalyse definiert, sind insbesondere die Polyester auf Basis von Adipin-, Kork- oder Kohlensäure und Decan- oder Dodecandiol, oder Octan-, Decan- oder Dodecandisäure mit Butandiol-1,4, Hexandiol-1,6, Octandiol-1,8, Decandiol-1,10 oder Dodecandiol-1,12, oder Terephthalsäure und Hexandiol-1,6 oder Dodecandiol-1,12 zu verwenden. Die Molekulargewichte liegen vorzugsweise zwischen 800 und 6.000. Besonders bevorzugt sind hochschmelzende Polyesterdiole B auf Basis von Dodecandisäure und Hexandiol-1,6 mit einem Molekulargewicht von 1.500 bis 5.000 oder auf Basis von Terephthalsäure und Hexandiol-1,6 mit einem Molekulargewicht von 800 bis 3.000.

Besonders bevorzugt sind z.B. Polyurethansysteme, bei denen die Mischung aus A und B zu 75 bis 98 Gew.-% aus Hydroxylpolyestern aus Adipinsäure und Hexandiol-1,6 in einem Molekulargewichtsbereich von 1500 bis 6000 oder zu 2 bis 15 Gew.-% aus Hydroxylpolyestern aus Terephthalsäure und Hexandiol-1,6 in einem Molekulargewichtsbereich von 800 bis 3000 oder zu 5 bis 30 Gew.-% aus Hydroxylpolyestern aus Dodecandisäure und Hexandiol-1,6 in einem Molekulargewichtsbereich von 1500 bis 6000 aufgebaut ist.

Die Herstellung der Polyester kann nach konventionellen Methoden erfolgen durch Schmelzkondensation der Dicarbonsäuren mit einem Überschuß der Diolkomponente bei Temperaturen von 180°C bis 280°C. Es können selbstverständlich auch Katalysatoren oder Schleppmittel, wie beispielsweise Toluol mitverwendet werden.

Selbstverständlich kommt als Herstellmethode auch die Umesterung von Dicarbonsäureestern mit Diolen, wie beispielsweise Terephthalsäuredimethylester mit Hexandiol-1,6 in Betracht. Die Kohlensäureester werden vorzugsweise durch Umesterung von Kohlensäureestern wie beispielsweise Diphenylcarbonat oder Kohlensäurediethylester und einem Überschuß von Diolen gewonnen.

In einer bevorzugten Ausführungsform werden als Kettenverlängerer Diole C mit einem Molekulargewicht <400 eingesetzt, vorzugsweise in einer Menge von maximal 1 Mol C pro Mol A + B.

Als gegebenenfalls mitzuverwendende niedermolekulare Diole sind insbesondere Di-, Tri- und/oder Tetraethylenglykol, 1,4-Dimethylolcyclohexan oder Umsetzungsprodukte von 4,4′-Hydroxyphenylpropan mit Ethylen- und/oder Propylenoxid zu nennen. Für besondere Effekte können selbstverständlich auch Diole mit Ionen und/oder Ionengruppen-bildenden Bausteinen, wie beispielsweise Dimethylolpropionsäure, N-Methyldiethanolamin und/oder Umsetzungsprodukte von Natriumbisulfit und propoxiliertem Butendiol-1,4 eingesetzt werden.

Als Polyisocyanate D kommen alle im wesentlichen bifunktionellen, wie beispielsweise Hexamethylendiisocyanat, 4,4′-Diisocyanatodicyclohexylmethan, Toluylendiisocyanate, Diphenylmethandiisocyanate und/oder auch Methylgruppen-substituierte Diphenylmethandiisocyanate, vorzugsweise aber 4,4′-Diphenylmethandiisocyanat mit bis zu 80 % 2,4′- Diphenylmethandiisocyanat in Betracht.

Das Verhältnis von OH-Gruppen in A, B und C und den Isocyanatgruppen in den Diisocyanaten D kann in weiten Grenzen variiert werden. Es liegt zwischen 3:1 und 1,2:1, vorzugsweise zwischen 2,2:1 und 1,4:1.

Die Herstellung der Isocyanatgruppen enthaltenden Polyurethansysteme erfolgt beispielsweise derart, daß die flüssigen Polyester A und B und gegebenenfalls die Kettenverlängerer C gemischt und mit einem Überschuß der Polyisocyanate D vermischt werden und die homogene Mischung abgefüllt wird oder bis zum Erhalt eines konstanten NCO-Wertes gerührt und dann abgefüllt wird. Als Reaktionstemperatur werden 60°C bis 150°C, vorzugsweise 65°C bis 110°C, gewählt. Selbstverständlich kann die Herstellung der reaktiven Polyurethansysteme auch kontinuierlich in einer Rührkesselkaskade oder geeigneten Mischaggregaten, wie beispeilsweise schnelldrehenden Mischern nach dem Rotor-Stator-Prinzip erfolgen.

Es können aber auch A und B getrennt voneinander mit dem Polyisocyanat umgesetzt werden und dann die Isocyanatgruppen enthaltenden Prepolymeren im erfindunsgemäßen Verhältnis gemischt und abgefüllt werden.

Es ist selbstverständlich möglich, die Polyester A und B oder einen Teil derselben mit einem Unterschuß von Diisocyanaten, vorzugsweise Hexamethylendiisocyanat, zu modifizieren und nach beendeter Reaktion die Urethangruppen-haltigen Polyesterdiole mit einem Überschuß von Diisocyanaten zu einem Isocyanatgruppen enthaltendem Hotmelt umzusetzen.

Die Polyurethansysteme sind, wenn sie unter Feuchtigkeitsausschluß bei Raumtemperatur bis 40°C gelagert werden, fast unbegrenzt haltbar. Sie können mit Füllstoffen, Farbstoffen, Harzen und/oder Streckölen

3

EP 0 421 154 B1

modifiziert werden und stellen hervorragende Klebstoffe dar.

Die Applikation erfolgt vorzugsweise bei erhöhter Temperatur, wobei die Polyurethansysteme kontinuierlich oder diskontinuierlich bei Temperaturen von 80°C bis 160°C aufgeschmolzen werden und die Schmelze mit den zu klebenden Substraten in Kontakt gebracht wird.

Normalerweise reicht die Substrat- und Luftfeuchtigkeit zur Abbindung aus, aber die Reaktion kann selbstverständlich durch zusätzliches Benebeln mit Wasser und/oder Polyole oder Katalysatoren enthaltende Medien beschleunigt werden.

Die Produkte können als Klebstoffe vielfältig eingesetzt werden, wie beispielsweise als Montageklebstoff zur vorläufigen Fixierung von Bauteilen oder als Buchbindeklebstoff, wo durch die rasche Kristallisation ein früher Festigkeitsaufbau erreicht wird, der eine schnelle Taktzeit auf den gängigen Buchbindemaschinen erlaubt.

Wenn die erfindungsgemäßen Polyurethansysteme als Klebstoffe verwendet werden, wird vorzugsweise so vorgegangen, daß sie aufgeschmolzen und auf wenigstens eine Oberfläche der zu verklebenden Substrate aufgebracht werden. Die zu verklebenden Teile können dann sofort unter Druck zusammengefügt werden. In einer bevorzugten Ausführungsform wird das aufgeschmolzene System auf eine Oberfläche der zu verklebenden Substrate aufgetragen. Nach einiger Zeit wird das andere Substratteil in vorgewärmter Form unter Druck und eventueller Formgebung mit der klebstofftragenden Oberfläche verbunden.

Beispiele

EP bedeutet jeweils Schmelzpunkt, gemessen nach der angegebenen Differentialthermoanalyse

Polyesterpolyole A

A-1     Hydroxylpolyester aus Adipinsäure und Butandiol-1,4
        MG 2.250 Hydroxylzahl 49
        EP: 52°C
A-2     Hydroxylpolyester aus Adipinsäure und Hexandiol-1,6
        MG 2.250 Hydroxylzahl 50
        EP: 55°C
A 3     Hydroxylpolyester aus Adipinsäure und Hexandiol-1,6
        MG 5.000 Hydroxylzahl 22,5
        EP: 57°C
A-4     Hydroxylpolyester aus 2 Mol Polyester A-2 und 1 Mol Diisocyanat D-2
        MG 4.600 Hydroxylzahl 24,5
        EP: 56°C

Polyesterpolyole B

B-1     Hydroxylpolyester aus Dodecandisäure und Hexandiol-1,6
        MG 2.000 Hydroxylzahl 57
        EP: 72°C
B-2     Hydroxylpolyester aus Dodecandisäure und Hexandiol-1,6
        MG 5.000 Hydroxylzahl 23
        EP: 72°C
B-3     Hydroxylpolyester aus Dodecandisäure und Hexandiol-1,6
        MG 1.000 Hydroxylzahl 110
        EP: 66°C
B-4     Hydroxylpolyester aus Dodecandisäure und Dodecandiol-1,6
        MG 2.000 Hydroxylzahl 54
        EP: 83°C
B-5     Hydroxylpolycarbonat aus Dodecandiol
        MG 2.000 Hydroxylzahl 55
        EP: 69°C
B-6     Hydroxylpolyester aus Adipinsäure und Dodecandiol
        MG 2.000 Hydroxylzahl 57
        EP: 76°C
B-7     Hydroxylpolyester aus Terephthalsäure und Hexandiol-1,6

4

MG 1.250 Hydroxylzahl 91
EP: 142°C
B-8 Hydroxylpolyester aus Terephthalsäure und Dodecandiol
MG 2.000 Hydroxylzahl 57
EP: 120°C
B-9 Hydroxylpolyester aus Dodecandisäure und Dodecandiol
MG 1.000 Hydroxylzahl 113
EP: 76°C

Diisocyanate

D-1 4,4'-Diisocyanatodiphenylmethan
D-2 Hexamethylendiisocyanat

Herstellung der Polyurethansysteme

Die geschmolzenen Polyesterpolyole A und B werden gemischt und für 60 Minuten bei 100°C bei ca. 20 mm/g unter Rühren entwässert. Bei ca. 80°C bis 90°C wird das Diisocyanat zugegeben und bis zur Konstanz des Isocyanatgehaltes unter Stickstoff gerührt.

Untersuchung der Hotmeltsysteme

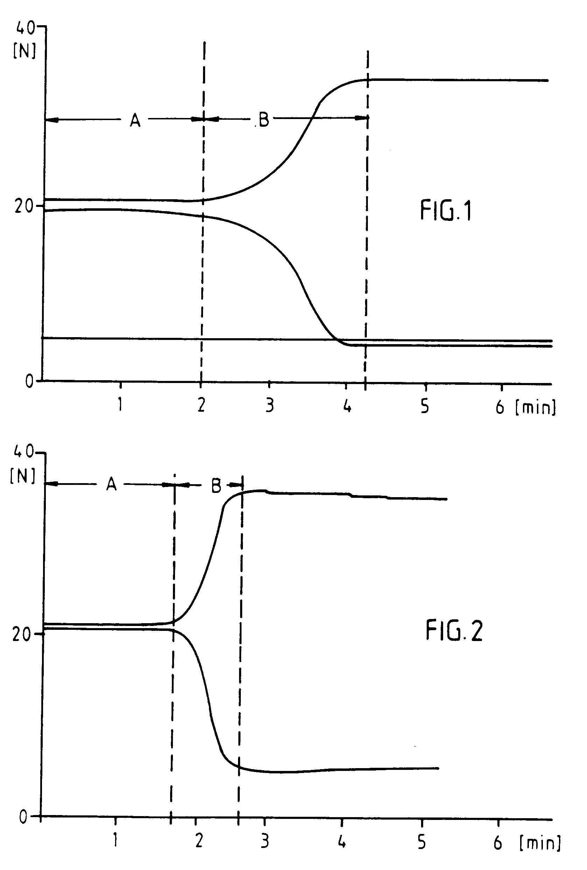

Nach zweiwöchiger Lagerung bei Raumtemperatur werden die Polyurethansysteme aufgeschmolzen.
Von dem flüssigen Polyurethansystem wird der Isocyanatgehalt durch Titration mit Dibutylamin bestimmt.
Das flüssige Polyurethansystem wird auf Buchenholzprobekörper aufgetragen und die Aushärtecharakteristik, aufgeteilt in eine Benetzungsphase A und Kristallisationsphase B bestimmt, siehe Fig. 1 und 2.
Hierzu wird der Klebstoff im Fügespalt der zu verklebenden Materialien einer sinusförmigen Wechselschubbeanspruchung unterworfen und die dabei auftretenden Schubkräfte fortlaufend gemessen. Die gemessenen Schubkräfte werden als Funktion der Zeit (in Sekunden) dargestellt, siehe Fig. 1 und 2. Die Schuberzeugung erfolgt über einen Frequenz-gesteuerten Schubmotor und eine feine Gewindespindel. Die Wegamplitude beträgt 200 µm, die Belastungsfrequenz 1 Hz. Der Fügespalt beträgt 0,2 mm, die Temperierung der Probenklemmbacken ist auf 20 bis ±2°C eingestellt. Die Meßwertregistrierung läuft über 10 Minuten.
Weiterhin wird ein 1.000 µm dicker Film der Polyurethansysteme auf eine Glasplatte gerakelt und nach 24 Stunden Lagerung bei Raumtemperatur und ca. 60 bis 70 % relative Feuchte um 180°C geknickt. Der Knicktest wird positiv (+) beurteilt, wenn der Film ohne zu brechen den Test besteht.

| Bsp. | Verbindung A (g) | | Verbindung B (g) | | Verbindung D-1 (g) | % NCO | |
|---|---|---|---|---|---|---|---|
| 1 | 1.000 | A-2 | 50 | B-4 | 266 | 2,94 | |
| 2 | 1.000 | A-2 | 100 | B-4 | 239 | 2,93 | |
| 3 | 1.000 | A-2 | 200 | B-4 | 265 | 2,98 | |
| 4 | 900 | A-2 | 100 | B-9 | 240 | 3,19 | |
| 5 | 1.000 | A-2 | 53 | B-7 | 235 | 3,05 | |
| 6 | 900 | A-2 | 100 | B-7 | 203 | 3,12 | |
| 7 | 900 | A-2 | 100 | B-3 | 238 | 3,15 | |
| 8 | 900 | A-2 | 100 | B-1 | 214 | 2,88 | |
| 9 | 900 | A-2 | 100 | B-2 | 201 | 2,44 | |
| 10 | 1.000 | A-1 | 50 | B-1 | 237 | 2,97 | |
| 11 | 1.000 | A-1 | 200 | B-4 | 274 | 3,07 | (s.Fig.2) |
| Ver-gleich | | | | | | | |
| 1-a | 1.225 | A-2 | - | | 250 | 2,91 | |
| 8-a | - | | 1.000 | B-1 | 250 | 3,30 | |
| 10-a | 1.110 | A-1 | - | | 250 | 2,90 | (s.Fig.1) |

Ergebnisse

| | Benetzung | Kristallisation | Knicktest |
|---|---|---|---|
| 1 | 90 | 30 | + |
| 2 | 55 | 15 | + |
| 3 | 30 | 15 | + |
| 4 | 65 | 10 | + |
| 5 | 60 | 30 | + |
| 6 | 80 | 20 | + |
| 7 | 150 | 50 | + |
| 8 | 90 | 15 | + |
| 9 | 40 | 15 | + |
| 10 | 60 | 30 | + |
| 11 | 100 | 55 | + |
| Ver-gleich | | | |
| 1-a | 80 | 90 | + |
| 8-a | 12 | 6 | - |
| 10-a | 130 | 125 | + |

**Patentansprüche**

1. Isocyanatgruppen enthaltende Polyurethansysteme auf Basis von Polyesterpolyolen und wenigstens einem Polyisocyanat, erhältlich durch Umsetzung von
   A) 70 bis 98 Gew.-Teilen wenigstens eines Polyesterdiols A mit einem Schmelzpunkt von 30°C bis 60°C und einem Molekulargewicht von 800 bis 8.000
   B) 2 bis 30 Gew.-Teilen wenigstens eines Polyesterdiols B mit einem Schmelzpunkt von 65°C bis 150°C und einem Molekulargewicht von 600 bis 8.000
   C) gegebenenfalls einem Diol C als Kettenverlängerer mit einem Molekulargewicht kleiner als 400 mit
   D) wenigstens einem Polyisocyanat D
   wobei das Verhältnis der Isocyanatgruppen des Polyisocyanats D zu den Hydroxylgruppen von A, B und C zwischen 3:1 und 1,2:1 liegt und wobei maximal 1 Mol C pro Mol A + B vorhanden sind.

2. Polyurethansysteme nach Anspruch 1, dadurch gekennzeichnet, daß das Verhältnis der Isocyanatgruppen zu OH-Gruppen zwischen 2,2:1 und 1,4:1 liegt.

3. Polyurethansysteme nach wenigstens einem der vorhergehenden Ansprüche, dadurch gekennzeichnet, daß die Mischung aus A und B zu 75 bis 98 Gew.-% aus Hydroxylpolyestern aus Adipinsäure und Hexandiol-1,6 in einem Molekulargewichtsbereich von 1.500 bis 6.000 aufgebaut ist.

4. Polyurethansysteme nach wenigstens einem der Ansprüche 1 und 2, dadurch gekennzeichnet, daß die Mischung aus A und B zu 2 bis 15 Gew.-% aus Hydroxylpolyestern aus Terephthalsäure und Hexandiol-1,6 in einem Molekulargewichtsbereich von 800 bis 3.000 aufgebaut ist.

5. Polyurethansysteme nach wenigstens einem der Ansprüche 1 und 2, dadurch gekennzeichnet, daß die Mischung aus A und B zu 5 bis 30 Gew.-% aus Hydroxylpolyestern aus Dodecandisäure und Hexandiol-1,6 in einem Molekulargewichtsbereich von 1.500 bis 6.000 aufgebaut ist.

6. Polyurethansysteme nach wenigstens einem der vorhergehenden Ansprüche, dadurch gekennzeichnet, daß als Diisocyanat Diphenylmethandiisocyanate verwendet werden.

7. Verfahren zum Verkleben von Substraten mit einem Polyurethansystem, dadurch gekennzeichnet, daß ein Polyurethansystem nach wenigstens einem der vorhergehenden Ansprüche verwendet wird.

8. Verfahren nach Anspruch 7, dadurch gekennzeichnet, daß das Polyurethansystem lösungsmittelfrei als Schmelzklebstoff verwendet wird.

9. Verfahren nach Anspruch 7, dadurch gekennzeichnet, daß es angewendet wird zum Verkleben von Bauteilen oder zum Buchbinden.

## Claims

1. Polyurethane systems containing isocyanate groups based on polyester polyols and at least one polyisocyanate obtainable by reaction of
   A) 70 to 98 parts by weight of at least one polyester diol A having a melting point of 30°C to 60°C and a molecular weight of a 800 to 8,000,
   B) 2 to 30 parts by weight of at least one polyester diol B having a melting point of 65°C to 150°C and a molecular weight of 600 to 8,000,
   C) optionally a diol C as chain-extending agent having a molecular weight below 400 with
   D) at least one polyisocyanate D,
   the ratio of the isocyanate groups of the polyisocyanate D to the hydroxyl groups of A, B and, optionally, C being between 3:1 and 1.2:1 and C being used in a quantity of at most 1 mol per mol A + B.

2. Polyurethane systems as claimed in claim 1, characterized in that the ratio of the isocyanate groups to isocyanate-reactive groups is from 2.2:1 to 1.4:1.

3. Polyurethane systems as claimed in at least one of the preceding claims, characterized in that 75 to 98% by weight of the mixture of A and B consists of hydroxylpolyesters of adipic acid and hexane-1,6-diol in a molecular weight range of 1,500 to 6,000.

4. Polyurethane systems as claimed in at least one of the claims 1 and 2, characterized in that 2 to 15% by weight of the mixture of A and B consists of hydroxylpolyesters of terephthalic acid and hexane-1,6-diol in a molecular weight range of 800 to 3,000.

5. Polyurethane systems as claimed in at least one of claims 1 and 2, characterized in that 5 to 30% by weight of the mixture of A and B consists of hydroxylpolyesters of dodecanedioic acid and hexane-1,6-diol in a molecular weight range of 1,500 to 6,000.

6. Polyurethane systems as claimed in at least one of the preceding claims, characterized in that diphenyl methane diisocyanates are used as the diisocyanate.

7. A process for bonding substrates using a polyurethane system, characterized in that the polyurethane system claimed in at least one of the preceding claims is used.

8. A process as claimed in claim 8, characterized in that the polyurethane system is used in solvent-free form as a hotmelt adhesive.

9. A process as claimed in claim 7, characterized in that it is used for bonding substrates or for bookbinding.

## Revendications

1. Systèmes de polyuréthannes contenant des groupes isocyanate, à base de polyesterpolyols et d'au moins un polyisocyanate, pouvant être obtenus par réaction

A) de 70 à 98 parties en poids d'au moins un polyesterdiol A ayant un point de fusion de 30 à 60°C et un poids moléculaire de 800 à 8000

B) de 2 à 30 parties en poids d'au moins un polyesterdiol B ayant un point de fusion de 65 à 150°C et un poids moléculaire de 600 à 8000

C) le cas échéant, d'un diol C comme agent d'allongement de chaîne ayant un poids moléculaire inférieur à 400, avec

D) au moins un polyisocyanate D

le rapport des groupes isocyanate du polyisocyanate D aux groupes hydroxyle de A, B et C étant situé entre 3:1 et 1,2:1 et au maximum une mole de C étant présente par mole de A + B.

2. Systèmes de polyuréthannes suivant la revendication 1, caractérisés en ce que le rapport des groupes isocyanate aux groupes OH se situe entre 2,2:1 et 1,4:1.

3. Systèmes de polyuréthannes suivant au moins l'une des revendications précédentes, caractérisés en ce que le mélange de A et B est constitué en proportion de 75 à 98 % en poids d'hydroxypolyesters d'acide adipique et d'hexanediol-1,6 dans une plage de poids moléculaire de 1500 à 6000.

4. Systèmes de polyuréthannes suivant l'une au moins des revendications 1 et 2, caractérisés en ce que le mélange de A et B est constitué à 2-15 % en poids d'hydroxypolyesters dérivés d'acide téréphtalique et d'hexanediol-1,6 dans une plage de poids moléculaire de 800 à 3000.

5. Systèmes de polyuréthannes suivant l'une au moins des revendications 1 et 2, caractérisés en ce que le mélange de A et B est constitué en proportion de 5 à 30 % en poids d'hydroxypolyesters d'acide dodécanedioïque et d'hexanediol-1,6 dans une plage de poids moléculaire de 1500 à 6000.

6. Systèmes de polyuréthannes suivant l'une au moins des revendications précédentes, caractérisés en ce qu'on utilise comme diisocyanate des diphénylméthane-diisocyanates.

7. Procédé d'assemblage par collage de substrats avec un système de polyuréthanne, caractérisé en ce qu'on utilise un système de polyuréthanne suivant l'une au moins des revendications précédentes.

8. Procédé suivant la revendication 7, caractérisé en ce que le système de polyuréthanne est utilisé sans solvant comme adhésif agissant à l'état fondu.

9. Procédé suivant la revendication 7, caractérisé en ce qu'il est utilisé pour l'assemblage par collage d'éléments de construction ou pour la reliure.

FIG.1

FIG.2